**Europäisches Patentamt**

**European Patent Office**

**Office européen des brevets**

(11) Veröffentlichungsnummer: **0 177 631**
**B1**

(12) # EUROPÄISCHE PATENTSCHRIFT

(45) Veröffentlichungstag der Patentschrift:
18.05.88

(51) Int. Cl.⁴: **C 08 G 59/40, C 08 L 63/00**

(21) Anmeldenummer: 84112232.8

(22) Anmeldetag: 11.10.84

(54) Härterlösung für Epoxidharzmassen.

(43) Veröffentlichungstag der Anmeldung:
16.04.86 Patentblatt 86/16

(45) Bekanntmachung des Hinweises auf die Patenterteilung:
18.05.88 Patentblatt 88/20

(84) Benannte Vertragsstaaten:
CH DE FR GB IT LI NL SE

(56) Entgegenhaltungen:
DE-A-3 026 706
GB-A-2 055 842
US-A-3 679 465

(73) Patentinhaber: SKW Trostberg Aktiengesellschaft,
Dr.- Albert- Frank- Strasse 32 Postfach 1150/1160,
D-8223 Trostberg (DE)

(72) Erfinder: von Seyerl, Joachim, Dr., Seestrasse 5b,
D-8221 Seeon (DE)

(74) Vertreter: Weickmann, Heinrich, Dipl.- Ing.,
Patentanwälte Dipl.- Ing. H.Weickmann Dipl.-
Phys.Dr. K.Fincke Dipl.- Ing. F.A.Weickmann
Dipl.- Chem. B. Huber Dr.- Ing. H. Liska Dipl.-
Phys.Dr. J. Prechtel Postfach 860820, D-8000
München 86 (DE)

EP 0 177 631 B1

## Beschreibung

Die Erfindung betzifft eine Härterlösung für Epoxidharzmassen sowie die Verwendung dieser Lösung zur Herstellung von lagerstabilen Epoxidharzlösungen, insbesondere solchen welche zur Imprägnierung von glasfaserverstärkten Geweben verwendet werden.

Epoxidharze besitzen aufgrund ihrer hervorragenden Eigenschaften wie hohe Schlagzähigkeit und Abriebfestigkeit, ausgezeichnetes Haftvermögen auf den meisten Werkstoffen sowie gute Licht-, Wasser- und Chemikalienbeständigkeit zahlreiche Anwendungsmöglichkeiten und finden vor allem als Lackharze, Gießharze und Bindemittel für gedruckte Schaltungen sowie für Klebstoffe und verkstärke Kunststoffe Verwendung.

Auch zur Herstellung glasfaserverstärkter Laminate werden Epoxidharzmischungen hergestellt, die in der Regel aus einem üblichen Epoxidharz oder Epoxidharzgemisch, einem Härter und ggf. einem Härtungsbeschleuniger sowie einer bestimmten Menge eines Lösungsmittels bzw. eines Lösungsmittelgemisches zur Einstellung einer bestimmten Viskosität bestehen. Als Härter wird in vielen Fällen Dicyandiamid (vgl. US-PS-2 637 715 und US-PS-3 391 113) eingesetzt, der ggf. noch Härtunggbeschleuniger wie z. B. Dimethylbenzylamin, 2-Methylimidazol, Tetraalkylguanidine enthalten kann.

Ein Lösungsmittel bzw. Lösungsmittelgemisch, welches die Aufgabe hat, alle Komponenten der Epoxidharzmischungen vollständig zu lösen, um eine homogene Verteilung auf dem zu imprägnierenden Gewebe sowie eine gleichmäßige Hörtung des imprägnierten Gewebes zu erhalten, besteht gemäß der DD-AS-133 955 aus Glykolethern wie z. B. Methyl- oder Ethylglykol, die gemäß der DE-AS-3 026 706, der GB-A-2 055 842 und der US-A-3 679 465 auch noch andere Lösungsmittel wie aromatische Kohlenwasserstoffe, Alkylformamide oder Ketone enthalten können. In diesen Lösungsmittelsystemen ist der Gewichtsanteil an Keton und Alkohol höhrer als der an Dimethylformamid.

Einer der Hauptnachteile dieser Lösungsmittelsysteme ist die begrenzte Löslichkeit des Dicyandiamids in diesen Lösungsmitteln, was zu erheblichen Schwierigkeiten bei der Herstellung und Anwendung der Epoxidharzmischungen führen kann.

Der Erfindung liegt daher die Aufgabe zugrunde, eine Härterlösung auf Basis von Dicyandiamid zu entwickeln, welche eine besonders gute Löslichkeit und Vertzäglichkeit mit dem Epoxidharzgemisch aufweist. ·

Diese Aufgabe wird erfindungsgemäß gelöst durch eine Härterlösung, welche dadurch gekennzeichnet ist, daß sie

a) 50 bis 95 Gewichtsteile Dimethylformamid

b) 5 bis 50 Gewichtsteile eines niedrigsiedenden Ketons und/ oder Alkohols

c) 5 bis 32 Gewichtsteile Dicyandiamid bezogen auf 100 Gewichtsteile der Summe der Komponenten a) und b) enthält.

Es hat sich nämlich überraschenderweise gezeigt, daß die erfindungsgemäße Härterlösung eine ausgezeichnete Löslichkeit für das Dicyandiamid sowohl allein als auch in Kombination mit den anderen Komponenten der Epoxidharzmischung besitzt. Auf diese Weise wird verhindert, daß es vor oder während der Imprägnierung glasfaserverstärkter Gewebe sowie bei der Trocknung zu Kristallausscheidungen kommt.

Darüberhinaus werden die Härtungszeiten mit Hilfe der erfindungsgemäßen Lösung aufgrund synergistischer Effekte zwischen dem Dicyandiamid und dem Lösungsmittelgemisch verkürzt, was ebenfalls nicht vorhersehbar war. Die Härterlösung der Erfindung besteht im wesentlichen aus 50 bis 95 Gewichtsteilen Dimethylformamid, 5 bis 50 Gewichtsteilen eines niedrigsiedenen Ketons und/oder Alkohols und 5 bis 32 Gewichtsteilen Dicyandiamid bezogen auf 100 Gewichtsteile der Summe der Komponenten a) und b). Unter niedrigsiedenden Ketonen und Alkoholen sind im Rahmen der Erfindung solche Lösungsmittel zu verstehen, die einen Siedepunkt bis zu 150° C besitzen. Als niedrigsiedende Ketone werden Aceton und/oder Methylethylketon bevorzugt, doch sind auch andere Ketone wie z. B. Diethylketon, Dipropylketon, Acetylaceton, Vinylmethylketon und Mesityloxid geeignet. Bei den niedrigsiedenden Alkoholen haben sich Methanol, Ethanol und 1-Methyl-2-propanol als besonders vorteilhaft erwiesen, doch können prinzipiell auch andere Alkohole wie z. B. n-Propanol, Isopropanol, n-Butanol und n-Pentanol eingesetzt werden. In jedem Fall soll der Siedepunkt des Lösungsmittelgemischs nicht über 160° C liegen, da die Trocknungsbedingungen bei der Herstellung glasfaserverstärkter Epoxidharzlaminate festliegen und keine höheren Siedepunkte zulassen. Das Härtungsmittel Dicyandiamid besitzt in der Härterlösung eine ausgezeichnete Löslichkeit von bis zu 25 Gew.-% bei 20° C und liegt damit deutlich über der Löslichkeit des Dicyandiamids in reinem Dimethylformamid.

Dies ist deshalb so überraschend, weil sich Dicyandiamid in den niedrigsiedenden Alkoholen und Ketonen nur sehr schlecht löst.

Die erfindungsgemäße Härterlösung kann ggf. noch die üblichen Härterbeschleuniger wie z. B. Dimethylbenzylamin in einer Menge von 1 bis 10 Gew.-%, vorzugsweise 2 bis 5 Gew.-%, bezogen auf den Dicyandiamidgehalt enthalten.

Diese Härterlösung eignet sich hervorragend zur Herstellung von lagerstabilen Epoxidharzlösungen, die üblicherweise einen Epoxidharzgehalt zwischen 40 und 60 Gew.-% aufweisen und zur Imprägnierung von glasfaserverstärkten Geweben eingesetzt werden. Als Epoxidharze kommen alle üblichen auf dem Markt befindlichen Typen in Frage. So können bspw. Epoxidharze verwendet werden, die unter der Bezeichnung Epikote 828 oder Aroldit LZ 7065 N-75 SP im Handel sind. Die Härterlösung wird dem Epoxidharz, das ggf. ebenfalls schon in einem geeigneten Lösungsmittel gelöst sein kann, in einer solchen Menge zugesetzt, daß der Dicyandiamidgehalt 1 bis 10 Gew.-% bezogen auf den Epoxidharzgehalt beträgt. Auch unter diesen Bedingungen kann auch nach wochenlanger Lagerung der Epoxidharzlösung kein Auskristallisieren des Dicyandiamids oder eine Viskositätsänderung dieser Lösung beobachtet werden. Auch nach der Trocknung des imprägnierten Gewebes können keine Dicyandiamidkristalle nachgewiesen werden, die bei der Herstellung der Laminate stören würden.

Die nachfolgenden Beispiele sollen die Erfindung erläutern, ohne sie jedoch darauf zu beschränken.

**Beispiel 1:**

Es wird eine 20 %-ige Dicyandiamidlösung aus
25 Gewichtsteilen Dicyandiamid
85 Gewichtsteilen Dimethylformamid
15 Gewichtsteilen Aceton hergestellt und als Härtungslösung zur Härtung folgender Harzmassen verwendet:
50 Gewichtsteile Epikote 828
7,5 Gewichtsteile Dimethylformamid
30 Gewichtsteile Aceton
12,5 Gewichtsteile Härterlösung
Die erhaltene Harzmasse ist klar gelöst und zeigt bei 3-wöchiger Lagerung bei Raumtemperatur keine Zunahme der Viskosität. Die Gelierzeit einer Probe bei 180°C beträgt 4 Minuten.

Eine zu Vergleichszwecken hergestellte Harzmasse, bestehend aus 50 Gewichtsteilen Epikote 828, 30 Gewichtsteilen Aceton, 25 Gewichtsteilen Härterlösung, bestehend aus einer 10 %-igen Lösung Dicyandiamid in Monomethylglycol, geliert unter gleichen Bedingungen nach 5 Minuten.

**Beispiel 2:**

Es wird eine 10 %-ige Lösung aus
11 Gewichtsteilen Dicyandiamid
50 Gewichtsteilen Dimethylformamid
50 Gewichtsteilen Methylethylketon hergestellt und als Härtungslösung zur Härtung folgender Harzmasse verwendet.
135 Gewichtsteile Araldit LZ 7065 N-75 SP
30 Gewichtsteile Härterlösung
10 Gewichtsteile Dimethylformamid
Die Imprägnierlösung verändert ihre Viskosität über einen Zeitraum von 3 Wochen nicht. Die Gelierzeit einer Probe bei 180 °C beträgt 4,5 Minuten.

**Beispiel 3:**

Es wird eine 20 %-ige Lösung aus
25 Gewichtsteilen Dicyandiamid
85 Gewichtsteilen Dimethylformamid
15 Gewichtsteilen 1-Methoxy-2-propanol hergestellt und zur Härtung folgender Harzmasse verwendet:
50 Gewichtsteile Epikote 828
12,5 Gewichtsteile Härterlösung
Die erhaltene viskose Harzmasse ist klar gelöst und zeigt bei dreiwöchiger Lagerung nur geringfügige Viskositätszunahme. Die Gelierzeit einer Probe bei 180°C beträgt 4 Minuten.

**Beispiel 4:**

Es wird eine 20 %-ige Lösung aus
25 Gewichtsteilen Dicyandiamid
85 Gewichtsteilen Dimethylformamid
15 Gewichtsteilen Methylethylketon hergestellt und zur Härtung folgender Harzmasse verwendet:
133 Gewichtsteile Araldit LZ 7065 N-75 SP
15 Gewichtsteile Härterlösung
12,5 Gewichtsteile Dimethylformamid
12,5 Gewichtsteile Methylethylketon
Die Viskosität der Imprägnierlösung bleibt stabil. Die Gelierzeit einer Probe bei 180°C beträgt 4,5 Minuten.

**Beispiel 5:**

Die in Beispiel 4 beschriebenen Harzmischung wird mit 0,2 Gewichtsteilen Dimethylbenzylamin Härtungsbeschleuniger versetzt. Ein Stück Glasfasergewebe wird mit dieser Lösung imprägniert, abgequetscht und in Trockenschrank bei 160°C 10 Min. getrocknet. Das nicht klebende Prepreg hat einen Harzgehalt von 35 %. Unter einen Polarisationsmikroskop betrachtet, können keine eingeschlossenen Dicyandiamidkristalle festgestellt werden.

**Patentansprüche**

1. Härterlösung für Epoxidharzmassen auf Basis von Dicyandiamid, dadurch gekennzeichnet, daß sie
a) 50 bis 95 Gewichtsteile Dimethylformamid
b) 5 bis 50 Gewichtsteile eines niedrigsiedenden Ketons und/oder Alkohols und
c) 5 bis 32 Gewichtsteile Dicyandiamid bezogen auf 100 Gewichtsteile der Summe der Komponenten a) und b), enthält.

2. Härterlösung nach Anspruch 1, dadurch gekennzeichnet, daß sie niedrigsiedenden Keton Aceton und/oder Methylethylketon enthält.

3. Härterlösung nach den Ansprüchen 1 und 2, dadurch gekennzeichnet, daß sie als niedrigsiedenden Alkohol Methanol und/oder Ethanol und/oder 1 Methoxy-2-propanol enthält.

4. Härterlösung nach den Ansprüchen 1 bis 3, dadurch gekennzeichnet, daß sie einen Härterbeschleuniger in einer Menge von 1 bis 10 Gew.-%, vorzugsweise 2 bis 5 Gew.-%, bezogen auf den Dicyandiamidgehalt enthält.

5. Verwendung der Härterlösung nach den Ansprüchen 1 bis 4 zur Herstellung von lagerstabilen Epoxidharzlösungen, dadurch gekennzeichnet, daß man die Härterlösung in einer solchen Menge einsetzt, daß der Dicyandiamidgehalt 1 bis 10 Gew.-% bezogen auf den Epoxidharzgehalt beträgt.

## Claims

1. Hardener solution for epoxide resin masses based on dicyandiamide, characterised in that it contains
   a) 50 to 95 parts by weight of dimethylformamide,
   b) 5 to 50 parts by weight of a low boiling ketone and/or alcohol and
   c) 5 to 32 parts by weight of dicyandiamide, referred to 100 parts by weight of the sum of components a) and b).

2. Hardener solution according to claim 1, characterised in that it contains low boiling ketone acetone and/ or methyl ethyl ketone.

3. Hardener solution according to claims 1 and 2, characterised in that, as low boiling alcohol, it contains methanol and/or ethanol and/or 1-methoxy-2-propanol.

4. Hardener solution according to claims 1 to 3, characterised in that it contains a hardener accelerator in an amount of 1 to 10 wt.-%, preferably 2 to 5 wt.-% referred to the dicyandiamide content.

5. Use of the hardener solution according to claims 1 to 4 for the production of storage-stable epoxide resin solutions, characterised in that one uses the hardener solution in such an amount that the dicyandiamide content amounts to 1 to 10 wt.-%, referred to the epoxide resin content.

## Revendications

1. Solution de durcisseur pour masses de résine époxyde à base de dicyandiamide, caractérisée en ce qu'elle contient:
   a) 50 à 95 parties en poids de diméthylformamide
   b) 5 à 50 parties en poids d'une cétone et/ou d'un alcool de faible point d'ébullition, et
   c) 5 à 32 partie en poids de dicyandiamide pour 100 parties en poids de la somme des constituants a) et b).

2. Solution de durcisseur suivant la revendication 1, caractérisée en ce qu'elle contient, comme cétone de faible point d'ébullition, de l'acétone et/ou de la méthyléthylcétone.

3. Solution de durcisseur suivant les revendications 1 et 2, caractérisée en ce qu'elle contient, comme alcool de faible point d'ébullition, du méthanol et/ou de l'éthanol et/ou du 1-méthoxy-2-propanol.

4. Solution de durcisseur suivant les revendications 1 à 3, caractérisée en ce qu'elle contient un accélérateur de durcissement dans une proportion de 1 à 10 % en poids, de préférence de 2 à 5 % en poids, par rapport à la teneur en dicyandiamide.

6. Utilisation de la solution de durcisseur suivant les revendications 1 à 4, pour la préparation de solutions de résines époxyde stables au stockage, caractérisée en ce qu'on utilise la solution de durcisseur dans une quantité telle que la teneur en dicyandiamide soit de 1 à 10 % en poids par rapport à la teneur en résine époxyde.